# EUROPEAN PATENT APPLICATION

(11) **EP 1 073 244 A1**
(43) Date of publication of application: **31.01.2001**
(21) Application number: 99480065.4
(22) Date of filing: 29.07.1999
(51) Int. Cl.: H04L 29/06, H04L 12/26

(54) **Method and system for monitoring dynamic host configuration protocol (DHCP) service in an internet protocol network**

(71) Applicant: INTERNATIONAL BUSINESS MACHINES CORPORATION, Armonk, NY 10504 (US)
(72) Inventor: Daude, Olivier, 06200 Nice (FR); Hericourt, Olivier, 06800 Cagnes sur Mer (FR)
(74) Representative: Etorre, Yves Nicolas

(57) **Abstract**

The present invention relates to DHCP Service monitoring, and more particularly to a system and method for early detecting and anticipating DHCP Service degradation and failures using availability and response time probes. The invention also uses a DHCP Service Analyser program for analysing and correlating availability and response time information provided by probes. The method for monitoring one or a plurality of dynamic host configuration protocol (DHCP) servers in an Internet Protocol (IP) network comprises for each DHCP server the step of measuring performance and availability of the DHCP server by simulating a DHCP client on a monitoring system and in particular the step of measuring the response time needed for the simulated DHCP client to retrieve an information, in particular an IP address and/or one or a plurality of configuration parameters, from the DHCP server. The method further comprises for each DHCP server the further steps of:
- sending a request for information to the DHCP server;
- receiving a response message from the DHCP server;
- measuring the time elapsed between the sending of the request and the reception of the response message;
- checking that the received information comprised in said response message is correct.

## Description

### Technical field of the invention

The present invention relates to computer networks, and more particularly to a method and system in an Internet Protocol (IP) network for monitoring the quality of a Dynamic Host Configuration Protocol (DHCP) service provided by a plurality of DHCP Servers, according to some response time and availability criteria.

### Background art

### INTERNET

Internet is a global network of computers and computers networks (the "Net"). Internet connects computers that use a variety of different operating systems or languages, including UNIX, DOS, Windows, Macintosh, and others. To facilitate and allow the communication among these various systems and languages, the Internet uses a language referred to as TCP/IP ("Transmission Control Protocol/Internet Protocol"). TCP/IP protocol supports three basic applications on the Internet:
- transmitting and receiving electronic mail,
- logging into remote computers (the "Telnet"), and
- transferring files and programs from one computer to another ("FTP" or "File Transfer Protocol").

One of the object of TCP/IP is to interconnect networks and to provide an universal communication service: an inter-network, or Internet. Each physical network has its own technology-dependent communication interface, in the form of a programming interface with basic communication functions (primitives).

Communication services are provided by a software which runs between the physical network and user applications. This software provides a common interface for these applications, independent of the underlying physical network. The architecture of the physical networks is hidden from the user.

The Internet protocol (IP) is still evolving through the mechanism of Request For Comments (RFC). New protocols (mostly application protocols) are designed and implemented by researchers. They are brought to the attention of the Internet community in the form of an Internet Draft (ID). The largest source of IDs is the Internet Engineering Task Force (IETF).

### IP ADDRESSES

To interconnect two networks, a computer system able to forward packets from one network to the other is attached to both networks. Such a machine is called a "router". The term "IP router" is also used because the routing function is part of the IP layer of TCP/IP.

IP addresses are used by the IP protocol to uniquely identify a host on the Internet (more precisely, an IP address identifies an interface capable of sending and receiving IP datagrams. A system can have multiple such interfaces. However, both hosts and routers must have at least one IP address). Each IP datagram (basic data packet exchanged between hosts through the IP network) contains a source IP address and a destination IP address.

IP addresses are represented by a 32-bit unsigned binary value which is usually expressed in a dotted decimal format. For example, 9.167.5.8 is a valid Internet address. A numeric form is used by the IP software. The mapping between the IP address and an easier-to-read symbolic name, for example myhost.ibm.com, is done by a Domain Name System.

### DOMAIN NAMES

The host names or computer names (like www.entreprise.com) are translated into numeric Internet addresses (like 194.56.78.3), and vice versa, by using a method called DNS ("Domain Name Service"). DNS is supported by network-resident servers, also known as Domain Name Servers or DNS servers.

### DYNAMIC IP

There are generally three pieces of information needed by a system in order to communicate through a TCP/IP network:
- an IP address (to uniquely identify the system on the network),
- a subnet mask (to determine the network and subnet parts of the address); and
- the address of at least one router (if the system is to be able to communicate with other devices outside of its immediate subnet).

These three values represent the bare minimum information that must be programmed into each device for participating in the TCP/IP world. Often a much higher number of parameters will be required. With the exponential growth rate of networking today, it is easy to see that the manual programming of these values into each device connected to the network represents a major administrative workload.

The increasingly mobile nature of the end users also raises problems with regard to the configuration of network devices. It is possible to allocate multiple sets of configuration parameters to a device, but:
- this obviously means even more workload for the administrator,
- this is wasteful with respect to the number of IP addresses allocated.

### BOOTSTRAP PROTOCOL (BOOTP)

The BOOTP protocol was originally developed as a mechanism to enable diskless hosts to be remotely booted over a network as workstations, routers, terminal concentrators and so on. It allows a minimum IP protocol stack with no configuration information to obtain enough information to begin the process of downloading the necessary boot code. BOOTP does not define how the downloading is done, but this process typically uses TFTP "Trivial File Transfer Protocol (TFTP)" as described in RFC 906 - Bootstrap Loading Using TFTP. Although still widely for this purpose by diskless hosts, BOOTP is also commonly used solely as a mechanism to deliver configuration information to a client that has not been manually configured. The BOOTP process involves the following steps:
- 1. The client determines its own hardware address; this is normally in a ROM (Read Only Memory) on the hardware.
- 2. A BOOTP client sends its hardware address in a UDP (User Datagram Protocol) datagram to the server. If the client knows its IP address and/or the address of the server, it should use them, but in general BOOTP clients have no IP configuration data at all. If the client does not know its own IP address, it uses 0.0.0.0. If the client does not know the server's IP address, it uses the limited broadcast address (255.255.255.255). The UDP port number is 67.
- 3. The server receives the datagram and looks up the hardware address of the client in its configuration file, which contains the client's IP address. The server fills in the remaining fields in the UDP datagram and returns it to the client using UDP port 68.
- 4. When it receives the reply, the BOOTP client will record its own IP address and begin the bootstrap process.

BOOTP is a draft standard protocol. Its status is recommended. The BOOTP specifications can be found in RFC 951 - Bootstrap Protocol. There are also updates to BOOTP, some relating to inter operability with DHCP (Dynamic Host Configuration Protocol), described in RFC 1542 - Clarifications and Extensions for the Bootstrap Protocol, which updates RFC 951 and RFC 2132 - DHCP Options and BOOTP Vendor Extensions.

### DYNAMIC HOST CONFIGURATION PROTOCOL (DHCP)

The Dynamic Host Configuration Protocol (DHCP) provides a framework for passing configuration information to hosts on a TCP/IP network. DHCP is based on the BOOTP protocol, adding the capability of automatic allocation of reusable network addresses and additional configuration options. DHCP messages use UDP port 67, the BOOTP server's well-known port and UDP port 68, the BOOTP client's well-known port. DHCP consists of two components:
- 1. A protocol that delivers host-specific configuration parameters from a DHCP Server to a host.
- 2. A mechanism for the allocation of temporary or permanent network addresses to hosts.

IP requires the setting of many parameters within the protocol implementation software. Because IP can be used on many dissimilar kinds of network hardware, values for those parameters cannot be guessed at or assumed to have correct default values. The use of a distributed address allocation scheme based on a polling / defence mechanism, for discovery of network addresses already in use, cannot guarantee unique network addresses because hosts may not always be able to defend their network addresses. DHCP supports three mechanisms for IP address allocation:
- 1. Automatic allocation : DHCP assigns a permanent IP address to the host.
- 2. Dynamic allocation : DHCP assigns an IP address for a limited period of time.
- 3. Manual allocation : The host's address is assigned by a network administrator.

DHCP is a draft standard protocol. Its status is elective. The current DHCP specifications can be found in RFC 2131 - Dynamic Host Configuration Protocol and RFC 2132 - DHCP Options and BOOTP Vendor Extensions.

### Configuration Parameters Repository

DHCP provides persistent storage of network parameters for network clients. A DHCP Server stores a key-value entry for each client, the key being some unique identifier, for example an IP subnet number and a unique identifier within the subnet (normally a hardware address), and the value contains the configuration parameters last allocated to this particular client.

One effect of this is that a DHCP client will tend to always be allocated the same IP address by the server, provided the pool of addresses is not over-subscribed and the previous address has not already been allocated to another client.

### DHCP Considerations

DHCP dynamic allocation of IP addresses and configuration parameters relieves the network administrator of great deal of manual configuration work. The ability for a device to be moved from network to network and to automatically obtain valid configuration parameters for the current network can be of great benefit to mobile users. Also, because IP addresses are only allocated when clients are actually active, it is possible, by the use of reasonably short lease times and the fact that mobile clients do not need to be allocated more than one address, to reduce the total number of addresses in use in an organization. However, the following should be considered when DHCP is being implemented:
- DHCP is built on UDP, which is, as yet, inherently insecure. In normal operation, an unauthorized client could connect to a network and obtain a valid IP address and configuration. To prevent this, it is possible to preallocate IP addresses to particular MAC (Medium Access Control) addresses (similar to BOOTP), but this increases the administration workload and removes the benefit of recycling of addresses.
- Unauthorized DHCP Servers could also be set up, sending false and potentially disruptive information to clients.
- In a DHCP environment where automatic or dynamic address allocation is used, it is generally not possible to predetermine the IP address of a client at any particular point in time. In this case, if static DNS ( Domain Name Server) servers are also used, the DNS servers will not likely contain valid host name to IP address mappings for the clients. If having client entries in the DNS is important for the network, one may use DHCP to manually assign IP addresses to those clients and then administer the client mappings in the DNS accordingly.

### BOOTP and DHCP Inter operability

The format of DHCP messages is based on the format of BOOTP messages, which enables BOOTP and DHCP clients to interoperate in certain circumstances. Support for BOOTP clients at a DHCP Server must be configured by a system administrator, if required.

### DYNAMIC DOMAIN NAME SYSTEM

In order to take advantage of DHCP, yet still to be able to locate any specific host by means of a meaningful label, such as its host name, the following extensions to the Domain Name System (DNS) are required:
- A method for the host name to address mapping entry for a client in the domain name server to be updated, once the client has obtained an address from a DHCP Server.
- A method for the reverse address to host name mapping to take place once the client obtains its address.
- Updates to the DNS to take effect immediately, without the need for intervention by an administrator.
- Updates to the DNS to be authenticated to prevent unauthorized hosts from accessing the network and to stop imposters from using an existing host name and remapping the address entry for the unsuspecting host to that of its own.
- A method for primary and secondary DNS servers to quickly forward and receive changes as entries are being updated dynamically by clients In short, a secure Dynamic Domain Name System (DDNS) is necessary.

In summary, in the DHCP and DDNS environment, DHCP provides a device with a valid IP address for the point at which it is attached to the network. DDNS provides a method of locating that device by its host name, no matter where that device happens to be attached to a network and what IP address it has been allocated.

More explanations about the domain presented in the above sections can be found in the following publications incorporated herewith by reference:
- TCP/IP Tutorial and Technical Overview by Martin W. Murhammer, Orcun Atakan, Stefan Bretz, Larry R. Pugh, Kazunari Suzuki, David H. Wood pushibed by IBM International Technical Support Organization.
- "Internet in a nutshell" by Valerie Quercia, published by O'Reilly, October 1997.

### PROBLEM

The problem is to monitor a Dynamic Host Configuration Protocol (DHCP) Service provided by one or a plurality of DHCP Servers, in order to detect any DHCP Server unavailability and any response time degradation in the DHCP Service. When multiple DHCP Servers are used, even if one DHCP Server fails, the DHCP Service usually continues to be provided to users, but with degraded performances. This is due to the nature of the DHCP protocol which is based on UDP BOOTP broadcast. The DHCP Service is provided to the DHCP client by the "fastest" DHCP Server to answer. As a consequence, when one DHCP Server fails in a multiple DHCP Servers environment, the DHCP Servers which are still available, continue to provide the DHCP Service until they reach their maximum capacity. Eventually the DHCP Service may fail because the available DHCP Servers cannot support the total load.
The problems are then to:
- early anticipate and detect DHCP Server failures;
- early detect abnormal response time from DHCP Servers;
- early detect degradation of DHCP Servers response time.

The problem is to detect as soon as possible a failure in a DHCP Server to anticipate and avoid any DHCP Service disruption. The performances provided when a DHCP Server is down are usually lower than expected because the remaining available DHCP Servers have to handle an additional load. The analysis of the DHCP Service response time is a good indicator for anticipating a service disruption.

### Objects of the invention

- An object of the present invention is to provide a method for optimizing a DHCP Service.
- It is a further object of the present invention to anticipate DHCP Service failures.
- It is a further object of the present invention to early detect a failure on any DHCP Server.
- It is another object of the present invention to early detect an abnormal response time on any DHCP Server.
- It is yet another object of the present invention to early detect a degradation of response time on any DHCP Server.

### Summary of the invention

The present invention relates to DHCP Service monitoring, and more particularly to a system and method for early detecting and anticipating DHCP Service degradation and failures using availability and response time probes.

The present invention also uses a DHCP Service Analyser program for analysing and correlating availability and response time information provided by probes.

The method for monitoring one or a plurality of dynamic host configuration protocol (DHCP) servers in an Internet Protocol (IP) network comprises for each DHCP server the step of measuring performance and availability of the DHCP server by simulating a DHCP client on a monitoring system and in particular the step of measuring the response time needed for the simulated DHCP client to retrieve an information, in particular an IP address and/or one or a plurality of configuration parameters, from the DHCP server.

The method comprises for each DHCP server the further steps of:
- sending a request for information to the DHCP server;
- receiving a response message from the DHCP server;
- measuring the time elapsed between the sending of the request and the reception of the response message;
- checking that the received information comprised in said response message is correct.

### Drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure 1 shows the IP address allocation by a DHCP Server to a DHCP Client according to prior art.
- Figure 2 is a view the availability and response time probes according to the present invention.
- Figure 3 is a flow chart of the availability and response time probes according to the present invention.
- Figure 4 is a view of the data flows associated with the availability and response time probes according to the present invention.
- Figure 5 described the storage of the availability and response time measurements, according to the present invention.
- Figure 6 is a flow chart showing a DHCP Service analyser program according to the present invention.

### Preferred embodiment of the invention

The present invention relates to a method and system for monitoring the quality of a DHCP Service provided by one or a plurality of DHCP Servers, according to some response time and availability criteria. More particularly, the present invention discloses a method for:
- retrieving IP addresses and IP configuration parameters on DHCP Servers,
- measuring associated response time,
- detecting failures and degradation of response time for each DHCP Server.

### IP ADDRESS ALLOCATION

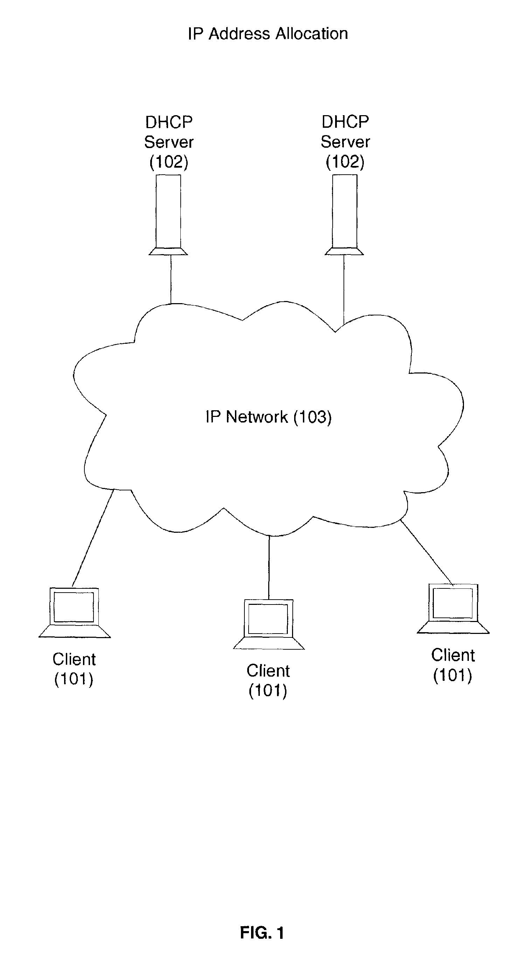

Figure 1 describes the DHCP Client/Server interactions when the DHCP Client does not know its network address. More particularly, Figure 1 shows the acquisition mechanism by a DHCP Client of the IP address and the IP minimal configuration parameters from a DHCP Server within an IP network. The DHCP Client (101) broadcasts a request on its local physical subnet (103). The request is forwarded by any router having a BOOTP forwarding mechanism. When the request is received by a DHCP Server (102), the DHCP Server checks whether it is able to answer the DHCP Client or not. If the DHCP Server has still some available IP address within its address database, a positive answer is returned to the DHCP Client. The DHCP Client selects the first DHCP Server for which a positive answer is received and confirms to this server its agreement.

More particularly the allocation of a new network address comprises the following steps:
- The DHCP Client broadcasts a request on its local physical subnet. The request may include some options such as network address suggestion or lease duration.
- Each DHCP Server may respond with a message that includes an available network address and other configuration options. The DHCP Server may record the address as offered to the DHCP Client to prevent the same address being offered to other DHCP Clients in the event of further messages being received before the first DHCP Client has completed its configuration.
- The DHCP Client receives one or more messages from one or more DHCP Servers. The DHCP Client chooses one based on the configuration parameters offered and broadcasts a message that includes the DHCP Server identifier option to indicate which message it has selected and the requested IP address option, taken from the DHCP Client IP address in the selected offer.
- The DHCP Servers receive the messages broadcasted by the DHCP Client. Those DHCP Servers not selected use the message as notification that the DHCP Client has declined that DHCP Server's offer. The DHCP Server selected in the message commits the binding for the DHCP Client to persistent storage and responds with a message containing the configuration parameters for the requesting DHCP Client.
- The DHCP Client receives the message with configuration parameters and performs a final check on the parameters. At this point the DHCP Client is configured.

### AVAILABILITY AND RESPONSE TIME PROBES

### Environment

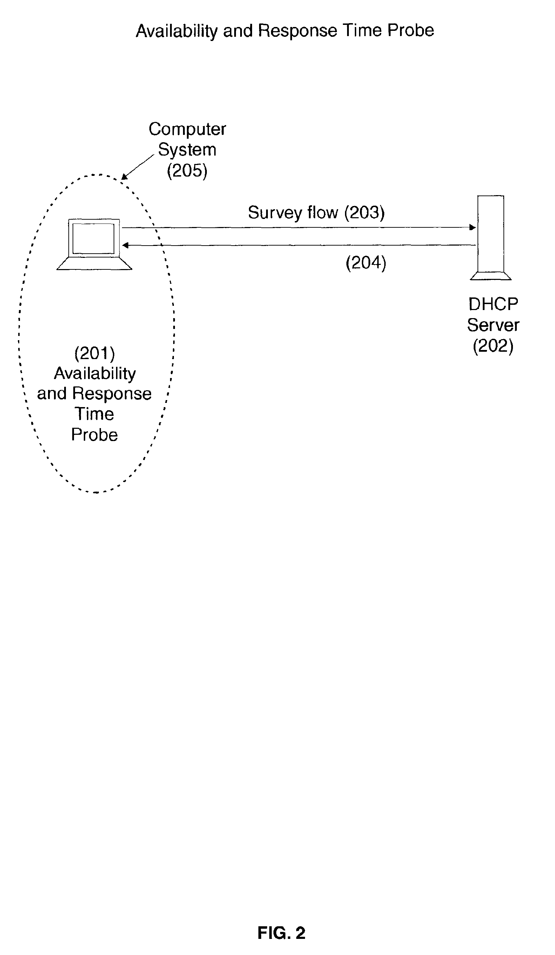

One object of the present invention is to check that a dynamic IP address can be actually allocated to a new DHCP Client requesting an IP address to a specific DHCP Server. As shown in Figure 2, an availability and response time probe (201) on a computer system (205) simulates a standard DHCP Client requesting an IP address (survey flow 203). This IP address is associated in the DHCP Server (202) with the specific MAC (Medium Access Control) address of the simulated DHCP Client. On reception of the DHCP Server return message (204), the availability and response time probe checks that IP address and configuration parameters (including IP addresses, subnet masks, gateway address, DNS - Domain Name server - address are transferred) are correctly allocated within a given amount of time (preferably in seconds). The probe returns either a response time (preferably in seconds) or a failure return code.

The same process can be used to simultaneously or successively measure the availability and response time of multiple DHCP servers.

### Internal Logic

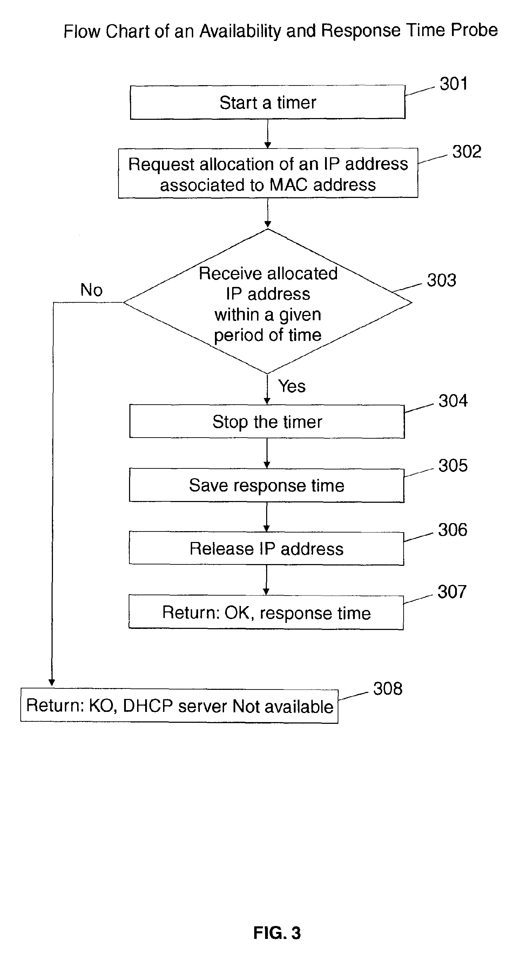

Figure 3 is a flow chart showing the internal logic of the availability and response time probes according to the present invention.
- (301) First a timer is started for a given period of time.
- (302) The allocation of an IP address associated with the MAC address of the computer system is requested to a DHCP Server. This DHCP Server is identified by its host name or its IP address.
- (303) If a positive response is returned in the given period of time, then :
   - (304) The timer is stopped, the parameter values received in the positive response are checked.
   - (305) If everything is valid, the response time is saved into a database.
   - (306) After a short period of time, the probe that was simulating the DHCP Client, releases the IP address by sending a release message to the DHCP Server.
   - (307) A positive return code is returned in output.
- (308) If no response is returned within the given period of time, a negative return code is returned in output.
In summary, the probe returns :
- either a response time (preferably in seconds), or
- a failure return code.
The response time is filed in a database. So, for each DHCP Server, the response time can be monitored, and it is possible to detect a failure in a DHCP Server or/and a degradation of the response time.

### Data Flow

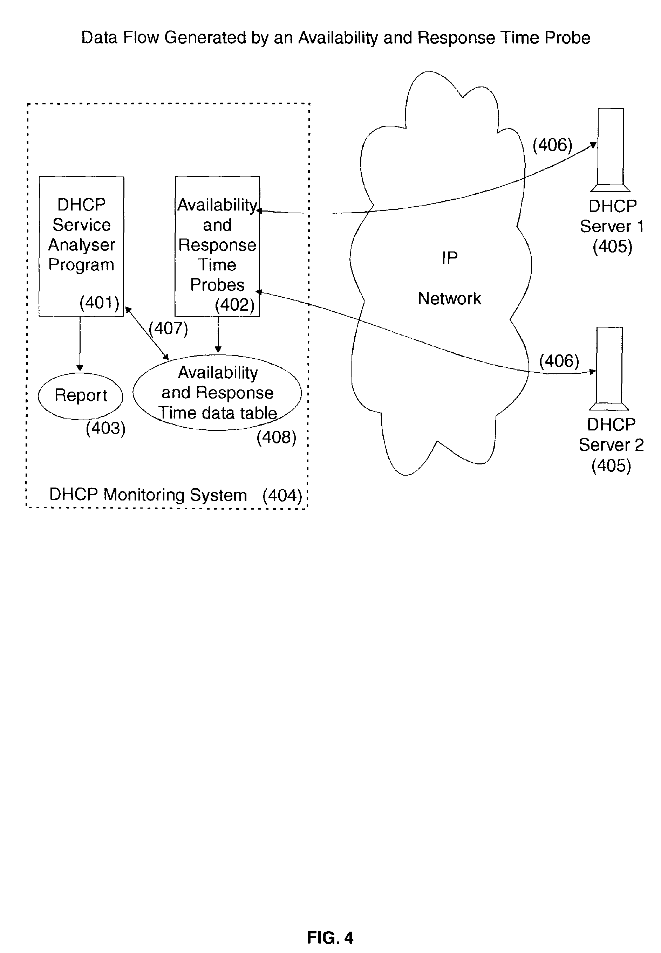

Figure 4 shows the data flow generated by the availability and response time probes according to the present invention. For each DHCP Server (405), at regular period of time, probes (406) are processed in a computer system called DHCP Monitoring System (404). Availability and response time measurements are saved in a database called Availability and Response Time Data Table (408).

Also at regular period of time, a DHCP Service analyzer (401) program in said DHCP Monitoring System (404) aggregates (407) and analyses these measurements to detect DHCP Server failures or variation/degradation of response time. More generally, the DHCP Service analyser has the possibility of:
- generating reports (403);
- computing statistics;
- detecting unavailability of DHCP Servers;
- detecting abnormal response times;
- alerting network administrator...

### Internal Storage

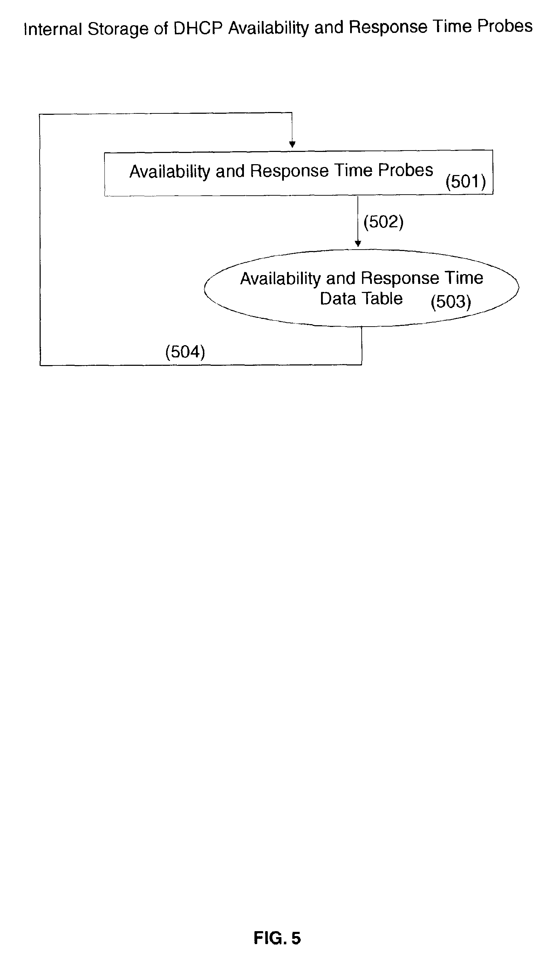

Figure 5 describes the internal storage of the availability and response time measurements within the DHCP Monitoring System.
- In the DHCP Monitoring System, each probe (501) updates (502) a table (503) with the measurements of each DHCP Server it monitors. The table contains the current state of all the monitored DHCP Servers.
- At configurable time intervals, availability and response time probes test again the DHCP Servers (504) and the cycle is repeated.

### Analyser

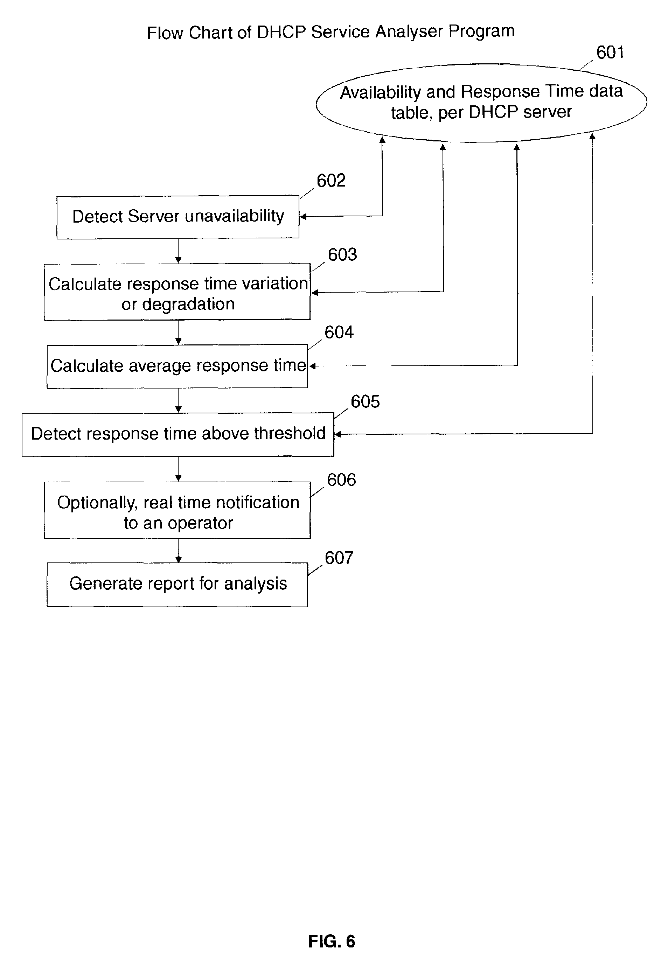

Figure 6 refers to the internal logic of the program running on the DHCP Monitoring System and called DHCP Service analyser. The process of analyzing the quality of the DHCP Service and if any problem, of reacting using as input the measurements (601) provided by the availability and response time probes, comprises the following steps.
- (602) A negative return code from a probe is interpreted as a DHCP Server failure. The detection of a DHCP Server in failure is particularly useful in a multi DHCP Server environment where :
   - the same DHCP Client can be served by a plurality of DHCP Servers, and
   - the remaining active DHCP Servers can absorb all the load of the DHCP Server in failure without the network administrator being aware of this failure and of the degradation of the DHCP Service. Probes enable proactive actions instead of waiting for a service interruption.
- (603) The variation and in particular the degradation of the response time of each DHCP Server is supervised. If for a DHCP Server, the response time currently measured is significantly different from previous measurements, this DHCP Server may have some problems.
- (604) Measurement can be compared to a computed average response time to check whether the quality of the DHCP Service itself is acceptable or not.
- (605) Measured response time can be compared to a predefined threshold.
- (606) Optionally, in case of abnormal behaviour of a DHCP Server, an alert can be send to a network administrator.
- (607) For long term analysis, measurements and other information are stored in a file.
While the invention has been particularly shown and described with reference to a preferred embodiment, it will be understood that various changes in form and detail may be made therein without departing from the spirit, and scope of the invention.

## Claims

1. A method for monitoring one or a plurality of dynamic host configuration protocol (DHCP) servers (102) in an Internet Protocol (IP) network (103), said method comprising for each DHCP server (102) the step of:
• measuring performance and availability of the DHCP server (202) by simulating a DHCP client (201) on a monitoring system (205, 404).

2. The method according to the preceding claims wherein the step of measuring performance and availability of a DHCP server comprises the step of:
• measuring the response time needed for the simulated DHCP client (201) to retrieve an information, in particular an IP address and/or one or a plurality of configuration parameters, from the DHCP server (202).

3. The method according to any one of the preceding claims wherein the step of retrieving an information, in particular an IP address and/or one or a plurality of configuration parameters, from a DHCP server, comprises the steps of:
• sending (203) a request for information to the DHCP server (202);
• receiving (204) a response message from the DHCP server (202);
• checking that the received information comprised in said response message is correct.

4. The method according to any one of the preceding claims wherein the step of measuring the response time needed to retrieve an information from a DHCP server comprises the step of:
• measuring the time elapsed between the sending of the request (203) and the reception of the response message (204).

5. The method according to any one of the preceding claims wherein the step of measuring the availability of a DHCP server comprises the step of:
• comparing (303) the measured response time with a given period of time, when said measured response time exceeds said given period of time, the DHCP server is considered as being in failure.

6. The method according to any one of the preceding claims wherein the step of measuring the performance of a DHCP server comprises the step of:
• comparing the measured response time with response times previously measured;
• determining degradation or amelioration of the measured response time.

7. The method according to any one of the preceding claims comprising the step of:
• storing (305) the performance and availability measurements in the monitoring system.

8. The method according to any one of the preceding claims comprising the step of:
• releasing (306) after measurement of the performance and availability, the information retrieved from the DHCP server, in particular the IP address.

9. A system (404) adapted for carrying out the method according to any one of the preceding claims.

10. A computer readable medium comprising instructions adapted for carrying out the method according to any one of steps 1 to 9.
